(19) Europäisches Patentamt

European Patent Office

Office européen des brevets

(11) Publication number: **0 501 335 A1**

# (12) EUROPEAN PATENT APPLICATION

(21) Application number: **92102939.3**

(22) Date of filing: **21.02.92**

(51) Int. Cl.⁵: **C01G 25/00**, C01F 7/54, C01F 17/00, C03C 3/32, C03C 1/00

Priority 250291 IT TO91000127.

(30) Priority: **25.02.91**

(43) Date of publication of application:
**02.09.92 Bulletin 92/36**

(84) Designated Contracting States:
**DE FR GB IT**

(71) Applicant: **SIP SOCIETA ITALIANA PER l'ESERCIZIO DELLE TELECOMUNICAZIONI P.A.**
**Via San Dalmazzo, 15**
**I-10122 Torino(IT)**
Applicant: **SIRTI S.p.A.**
**Via G.B. Pirelli, 20**
**I-20124 Milano(IT)**
Applicant: **PIRELLI CAVI S.p.A.**
**Piazzale Cadorna, 5**
**I-20123 Milano(IT)**

(72) Inventor: **Abollino, Ornella**
**Corso Novara, 106**
**I-10100 Torino(IT)**
Inventor: **Mentasti, Edoardo**
**Via Genovesi, 19**
**I-10100 Torino(IT)**
Inventor: **Modone, Eros**
**Via S. Anna, 309**
**I-10070 Balangero (Torino)(IT)**

(74) Representative: **Riederer Freiherr von Paar zu Schönau, Anton et al**
**Lederer, Keller & Riederer, Freyung 615,**
**Postfach 26 64**
**W-8300 Landshut(DE)**

(54) **A method of recovery of basic reactants for ZBLAN glass synthesis from purified solutions.**

(57) A method of recovery of basic reactants for ZBLAN glass synthesis from purified solutions, wherein two purified aqueous solutions are mixed together in proper conditions of weight ratios, temperatures and concurrent equilibriums to obtain by precipitation a product consisting of a double low-solubility salt, which is afterwards separated from the solvent, e.g. by filtration, and used for glass production.

Rank Xerox (UK) Business Services

The present invention relates to glass manufacturing processes to be used in the telecommunications domain and more particularly it concerns a method of recovery of basic reactants for ZBLAN glass synthesis from purified solutions. As known, acronym ZBLAN denotes glasses composed of a mixture of fluorides wherein a typical composition can be $ZrF_4:BaF_2:LaF_3:AlF_3:NaF$.

Telecommunications using light radiations transmitted through optical fibres require very long connections, e.g. transoceanic cables, using a number as limited as possible of repeaters along the line. By use of present optical silica fibres the repeater number remains high owing to the constraints imposed by intrinsic silica attenuation values.

To cope with these problems research is oriented towards higher transparency materials, such as fluoride based glasses, which theoretically present a minimum of attenuation of about a hundredth of that of silica based glasses, at wavelengths ranging from 2.5 to 3 $\mu$m.

Practically such minimum attenuation levels have not yet been attained since starting reactants, i.e. compounds whose reaction yields the starting materials for glass manufacture, contain both metal and oxidic impurities, which, giving rise to partial absorption of the light radiation transmitted, are detrimental to the optical properties of the fibre produced.

Both industrial suppliers of reactants, and the various specialists devoted to the research on optical materials have suggested various solutions for purifying fluorides which are the starting reactants for glass synthesis. Methods exploiting repeated operations of sublimation and/or crystallisation of the reactants in solution are worth mentioning. A method suggested by the same applicant in Italian patent No. 1219279, granted on the 3rd May 1990, purifies an aqueous solution of oxychlorides, that are the precursors of basic fluorides, by selective complexation of transition metal impurities by a ligand or of a mixture of ligands and in the subsequent absorption of complexes formed on an active resin.

The reductions in Fe and Cu obtained by different methods applied to reactants suited to ZBLAN glass manufacture are listed by way of example in the following table.

| Method | Fe reduction | Cu reduction |
|---|---|---|
| Extraction with HCl | 77% | 92% |
| Soxhlett extraction with HCl | 82% | 92% |
| Extraction with $HNO_3$ | 80% | 96% |
| Adsorption on resins | 75% | 96% |
| Electrodeposition on Pt | - | 94% |
| Electrodeposition on Hg | 92% | 93% |

After purifying the solution, which notwithstanding its high acidity degree is essentially an aqueous solution, fluorides suited to glass synthesis are to be recovered by separating them from water.

Unfortunately a lot of these fluorides under such conditions crystallise as hydrates, that's why purification process results valid for metallic impurities, but dangerous in that it introduces water, which is a source of absorption of the light radiation to be transmitted through the optical fibre produced. Among the known methods for eliminating the structural water the most widely used is the thermal method, described e.g. in the article entitled "New fluorination reactions of ammonium bifluoride" by J.S.Sanghera et alii, issued on Journal of American Ceramic Society, Vol.73 (1990) pages 1339-1446. However, this method presents the disadvantage of inducing oxyfluoride formation according to reactions of the type of the following one:

$$ZrF_4 \cdot H_2O \rightarrow ZrOF_2 + 2HF$$

By raising the temperature, oxides can be generated by decomposition of oxyfluorides to the detriment of glass transparency.

The disadvantages above are overcome by the method of recovery of basic reactants for ZBLAN glass synthesis from purified solutions, provided by the present invention, which is easy to control and to carry out at room temperature and without particular precautions as concerns the atmosphere.

It allows the production of a purified solid compound, deprived of crystallisation water and directly usable for glass synthesis.

The present invention provides a method of recovery or winning of basic reactants for ZBLAN glass synthesis from purified solutions, wherein basic reactants, consisting of fluorides, are dissolved into solutions, which are then purified so as to reduce transition metal contents, characterised in that two aqueous purified solutions of the reactants above are mixed together in proper conditions of weight ratios, of temperature and concurrent equilibriums, so as to obtain by precipitation a product consisting of a double salt with low solubility, which is afterwards separated from the solvent and used for glass manufacture.

The foregoing and other characteristics of the present invention will be made clearer by a preferred embodiment thereof given by way of a non limiting example.

Present method consists in the separated purification of two basic fluorides, by using one of the technique which requires them be dissolved into solutions, and in the recovery of the same fluorides as low-solubility double salts.

By way of example the purification of two basic fluorides, namely zirconium fluoride $ZrF_4$ and sodium fluoride $NaF$, will be described hereinafter.

The first step consists in dissolving zirconium fluoride into a solution with an acid or with a mixture composed of hydrofluoric and nitric acids, in order to obtain both the reactant and the impurities dissolved for the following purification. The step is analogous for sodium fluoride, which, owing to its higher solubility, can also be dissolved in water.

Both solutions are then purified according to one of the known methods, so as to reduce as much as possible the contents of transition metals such as iron, copper and the like, obtaining two purified aqueous solutions of zirconium fluoride and sodium fluoride.

Then the solutions are mixed together and made to react with each other, and in function of weight ratios, temperature, concurrent equilibriums, etc., they give rise to different double salts, among which $NaZrF_5$, $Na_3Zr_2Fl_3$, $Na_2ZrF_6$, $Na_3ZrF_7$ are noteworthy.

These double salts have considerably lower solubility than that of the individual reactants. This is due to the fact that their structure goes beyond the simple chemical adduct, as it contains separable ionic entities, i.e. they are not two salts, but an actual chemical compound. Thanks to low solubility, the salt precipitates and it is easily separated from the solvent.

A typical example is offered by $Na_3AlF_6$, which presents a water solubility of 0.042 g for 100 g against 0.41 of $AlF_3$ and 4.03 of $NaF$; this compound, whose structure has been studied, shows an octahedron $(AlF_6)^{3-}$ co-ordinated with three sodium ions.

There are numerous double fluoride salts which can be obtained from reactions between simple fluorides: a lot of them can be used for glass manufacture. More particularly, all the fluorides composing ZBLAN glasses can partly or totally consist of double salt starting materials.

Among the possible reactions between fluorides capable of yielding double salts to be used for glass manufacture, those between $NaF$ and $ZrF_4$ with production of $Na_3ZrF_7$, between $NaF$ and $AlF_3$ with production of $Na_3AlF_6$, between $NaF$ and $LaF_3$ with production of $NaLaF_4$ and between $BaF_2$ and $ZrF_4$ with production of $BaZrF_6$ are worth mentioning. These double salts present, if compared with simple fluorides they derive from, the advantage of being free from structural water. This means that, if used as starting materials in ZBLAN glass synthesis, they introduce less oxygen, which is an impurity as detrimental as transition metals. They are therefore very suited to manufacture of long-distance telecommunications optical fibres, owing to low attenuation achievable.

Moreover, the double salt precipitation is per se a further purification of the material, since possible impurities still present remain mostly in the solution and can be then separated from double salts precipitated by simple filtration.

**Claims**

1. A method of recovery of basic reactants for ZBLAN glass synthesis from purified solutions, wherein basic reactants, consisting of fluorides, are dissolved into solutions, which are then purified so as to reduce transition metal contents, characterised in that two aqueous purified solutions of the reactants above are mixed together in proper conditions of weight ratios, of temperature and concurrent equilibriums, so as to obtain by precipitation a product consisting of a double salt with low solubility, which is afterwards separated from the solvent and used for glass manufacture.

2. A method of recovery of basic reactants as in claim 1, characterised in that among the possible reactions between fluorides yielding double salts useful to glass manufacture, those between $NaF$ and $ZrF_4$ with production of $Na_3ZrF_7$, $NaZrF_5$, $Na_3Zr_2Fl_3$, $Na_2ZrF_6$, between $NaF$ and $AlF_3$ with production of $Na_3AlF_6$, between $NaF$ and $LaF_3$ with production of $NaLaF_4$ and between $BaF_2$ and $ZrF_4$ with production of $BaZrF_6$ are chosen.

3. A method of receovery of basic reactants as in claim 1 or 2, characterized in that the fluorides composing ZBLAN glass are wholly or partly replaced by starting materials consisting of double salts.

European Patent
Office

EUROPEAN SEARCH REPORT

Application Number

EP    92 10 2939
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | CHEMICAL ABSTRACTS, vol. 104, no. 18, May 1986, Columbus, Ohio, US; abstract no. 154402K, SAKHAROV: 'Charge for producing fluoride glass' page 342 ; * abstract * & SU-A-1 204 588 (SAKHAROV V.V.) --- | 1-3 | C01G25/00 C01F7/54 C01F17/00 C03C3/32 C03C1/00 |
| A | JOURNAL OF THE AMERICAN CERAMIC SOCIETY. vol. 72, no. 8, 1989, COLUMBUS US pages 1441 - 1443; K.J.EWING ET AL.: 'reaction of zirconium fluoride monohydrate and ammonium bifluoride:' * page 1441 * --- | 1 | |
| A | CHEMICAL ABSTRACTS, vol. 100, no. 16, April 1984, Columbus, Ohio, US; abstract no. 123523P, A.WLADYSLAW: 'synthetic cryolite for vacuum vapor-deposited coatings' page 133 ; * abstract * & PL-A-119 996 (POLITECHNIKA SLASKA) --- | 1-3 | |
| A | derwent publ ltd london acc.nr.90-153958, week 20 ,27 june 1990 * abstract * & SU-A-1 520 008 (KOROBITSYN A S) --- | 1-3 | TECHNICAL FIELDS SEARCHED (Int. Cl.5 ) C01G C01F C03C |
| A | CHEMICAL ABSTRACTS, vol. 77, no. 6, 7 August 1972, Columbus, Ohio, US; abstract no. 42530T, BATSANOVA L.R.: 'double fluorides of rare earths and sodium (potassium)' page 587 ; * abstract * --- -/-- | 2 | |

The present search report has been drawn up for all claims

| Place of search | Date of completion of the search | Examiner |
|---|---|---|
| THE HAGUE | 19 MAY 1992 | LIBBERECHT-VERBEECK |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)

European Patent

Office

EUROPEAN SEARCH REPORT

Application Number

EP   92 10 2939

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | CHEMICAL ABSTRACTS, vol. 92, no. 26, June 1980, Columbus, Ohio, US; abstract no. 225779, LAVAL J.P.: 'synthesis and characterization of the solid phase of the system' page 699 ; * abstract * | 2 | |

TECHNICAL FIELDS
SEARCHED (Int. Cl.5 )

The present search report has been drawn up for all claims

| Place of search | Date of completion of the search | Examiner |
|---|---|---|
| THE HAGUE | 19 MAY 1992 | LIBBERECHT-VERBEECK |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)